Europäisches Patentamt

(19) European Patent Office

Office européen des brevets

(11) Veröffentlichungsnummer : **0 091 918**
**B1**

(12) **EUROPÄISCHE PATENTSCHRIFT**

(45) Veröffentlichungstag der Patentschrift :
**30.12.86**

(21) Anmeldenummer : **82903038.6**

(22) Anmeldetag : **05.10.82**

(86) Internationale Anmeldenummer :
**PCT/DE 82/00196**

(87) Internationale Veröffentlichungsnummer :
**WO/8301218 (14.04.83 Gazette 83/09)**

(51) Int. Cl.⁴ : **B 23 Q 11/00**, F 16 P 1/00,
F 16 P 3/00

(54) SICHERHEITSEINRICHTUNG FÜR EIN ELEKTROMOTORISCH BETRIEBENES ARBEITSGERÄT MIT GEFAHRBRINGENDEM, BEWEGTEM WERKZEUG.

(30) Priorität : **07.10.81 DE 3139872**
**27.05.82 DE 3219901**

(43) Veröffentlichungstag der Anmeldung :
**26.10.83 Patentblatt 83/43**

(45) Bekanntmachung des Hinweises auf die Patenterteilung : **30.12.86 Patentblatt 86/52**

(84) Benannte Vertragsstaaten :
**AT CH FR GB LI**

(56) Entgegenhaltungen :
**DE-A- 2 644 353**
**DE-A- 2 917 497**
**DE-C- 875 119**
**US-A- 2 392 068**
**US-A- 2 969 130**

(73) Patentinhaber : **Susemihl, Rolf**
**Altes Sonnenbad**
**D-6380 Bad Homburg v.d. Höhe (DE)**

(72) Erfinder : **Susemihl, Rolf**
**Altes Sonnenbad**
**D-6380 Bad Homburg v.d. Höhe (DE)**

(74) Vertreter : **Görtz, Dr. Fuchs, Dr. Luderschmidt Patentanwälte**
**Sonnenberger Strasse 100 Postfach 26 26**
**D-6200 Wiesbaden (DE)**

Jouve, 18, rue St-Denis, 75001 Paris, France

**Beschreibung**

Technisches Gebiet

Die Erfindung betrifft eine Sicherheitseinrichtung für den Antrieb eines ein gefahrbringendes bewegtes Werkzeug aufweisenden, elektromotorisch angetriebenen Arbeitsgerätes mit einer Antriebswelle für das Werkzeug, einem Elektromotor mit einer Abtriebswelle, einer die Abtriebswelle mit der Antriebswelle verbindenden Antriebseinrichtung und einem Schalter zum Betätigen des Elektromotors, wobei die Sicherheitseinrichtung eine im Bereich der Antriebseinrichtung angeordnete Bremseinrichtung für geringe Bremsleistung aufweist und eine mit dem Schalter des Elektromotors verbundene Betätigungseinrichtung vorgesehen ist, die beim Ausrücken des Schalters die Bremseinrichtung mit der Antriebseinrichtung in Eingriff bringt.

Die Erfindung ist mit besonderem Hinblick auf die Anwendung bei Kreissägen konzipiert worden, läßt sich aber auch in Verbindung mit anderen Arbeitsgeräten einsetzen, wie beispielsweise elektrischen Rasenmähern, die mit einem rotierenden Flügelmesser versehen sind. Unter geringen Bremsleistungen sind im Sinne der Erfindung solche zu verstehen, welche üblicherweise zum Abbremsen der rotierenden Sägeblätter, Flügelmesser oder dergleichen erforderlich sind.

Zugrunde liegender Stand der Technik

Arbeitsgeräte der genannten Art, die zum Teil mit sehr schnell rotierenden Werkzeugen ausgerüstet sind, bergen die Gefahr in sich, daß das Werkzeug nach Ausschalten des elektrischen Antriebsmotors noch eine erhebliche Zeit nachläuft und dabei Körperverletzungen bei unbeachtetem Berühren hervorrufen kann. Sicherheitsvorschriften verlangen daher, daß beispielsweise das Kreissägeblatt einer Tischkreissäge spätestens 10 Sekunden nach dem Ausschaltvorgang zum Stillstand gekommen sein muß.

Es mangelt zwar nicht an technischen Lösungen, diese Forderung zu erfüllen, bei preiswerten Arbeitsgeräten, insbesondere für den häuslichen Arbeitsbereich, kann sich die Berücksichtigung solcher kostenaufwendiger technischer Sicherheitsmaßnahmen nachträglich auf die Marktpreisgestaltung auswirken. Bei der Herstellung solcher Geräte ist man bemüht, weitgehend preisgünstige Serienkomponenten einzusetzen, was insbesondere auch für die elektrischen Antriebsmotoren zutrifft, die aus marktgängigen Standreihen ausgewählt werden, und bei denen die Berücksichtigung jeder technischen Zusatzforderung eine im allgemeinen erhebliche Kostenerhöhung nach sich zieht. Aus der DE-A-26 44 353 ist eine Sicherheitseinrichtung der genannten Art bekannt, bei der im Bereich der Antriebseinrichtung eine mechanische Bremseinrichtung angeordnet ist. Der Antriebswelle für das Werkzeug ist eine Riemenscheibe zugeordnet, die Bremsvorrichtung besteht aus einem Bremskonus, der mittels eines Hebelgestänges in den Innenkonus der Riemenscheibe einläuft. Die Bremsvorrichtung selbst wird auf elektro-pneumatischem Wege vom Hauptschalter des Arbeitsgerätes betätigt.

Offenbarung der Erfindung

Aufgabe der vorliegenden Erfindung ist es, eine Sicherheitseinrichtung für ein elektromotorisch angetriebenes Arbeitsgerät zu schaffen, die die Forderung einer geringen Nachlaufzeit des Werkzeuges nach Abschalten des Motors erfüllt und sich dennoch aus einfachsten, marktüblichen Komponenten und Bauteilen zusammenstellen läßt.

Diese Aufgabe wird für einen Sicherheitsantrieb der eingangs bezeichneten Art erfindungsgemäß dadurch gelöst, daß als Bremseinrichtung des Arbeitsgeräts ein elektrischer Generator vorgesehen ist, der zum Bremseinsatz mit der Antriebseinrichtung mechanisch in Verbindung bringbar ist. Bei der Auswahl des Generators ist hierbei in erster Linie an einen serienmäßigen, preisgünstigen Fahrraddynamo gedacht, der im einfachsten Falle lediglich mit einer Schelle zur Halterung und einer entsprechenden Riemenscheibe für ein geeignetes Zusammenwirken mit einem Triebriemen ausgerüstet zu werden braucht. Der Generator kann aber auch mit einer Reibkupplung versehen sein, über die er mit einer anders gearteten Antriebseinrichtung in Eingriff gebracht werden kann.

Die von dem Generator während des Bremsvorgangs erzeugte Spannung kann darüberhinaus vorteilhafter weise noch für den Betrieb einer elektrischen Warneinrichtung ausgenutzt werden, die an geeigneter Stelle an dem Arbeitsgerät angebracht werden kann und solange ein Warnsignal abgibt, wie das Werkzeug des Gerätes noch nachläuft und dadurch eine Spannung in dem Generator induziert. Die elektrische Warneinrichtung wird zweckmäßiger weise als eine Warnlampe ausgebildet, die an gut sichtbarer Stelle des Arbeitsgerätes angebracht werden sollte. Darüberhinaus kann zusätzlich eine vom Strom unabhängige, rein mechanische Warneinrichtung vorgesehen sein. So kann beispielsweise über die Bremseinrichtung und nachgeschaltete Mittel zumindest ein Teil der kinetischen Restenergie des abgeschalteten Elektromotors beziehungsweise der Antriebseinrichtung zur Betätigung einer mechanischen Signal- und Warneinrichtung umgesetzt werden. Eine rein mechanische Warn- und Signaleinrichtung bringt gegenüber einer elektrischen Warn- und Signaleinrichtung den Vorteil mit sich, daß sie unter Umständen, etwa bei in feuchter Umgebung eingesetzten Arbeitsmaschinen störunanfällig ist.

Darüberhinaus ist sie billiger als eine elektrische Warn- und Signaleinrichtung. Wird ein Höchstmaß an Sicherheit verlangt, so ist eine kombinierte mechanische und elektrische Warn- und Signaleinrichtung einzusetzen, ao daß sowohl ein Warnton hörbar als auch ein Warnlampe sichtbar wird.

Im folgenden wird die Erfindung insbesondere im Hinblick auf ihr vorteilhafte Anwendung bei Tischkreissägen mit Riementrieb als Antriebseinrichtung beschrieben. Zwar verzichtet man bei einer Vielzahl von elektromotorisch angetriebenen Arbeitsgeräten bereits auf einen Riementrieb zur Übertragung der Antriebsleistung vom Motor auf das Werkzeug und wählt anstatt dessen als Antriebseinrichtung ein Getriebe oder einen direkten Antrieb von der Antriebswelle des Werkzeuges über beispielsweise eine Kupplung. In Verbindung mit Kreissägen kann das Vorsehen eines Riemenantriebes aus den im folgenden angegebenen Gründen aber sogar vorteilhaft sein. Bei Kreissägen strebt man im allgemeinen an, daß das Sägeblatt möglichst weit aus der Tischplatte hinausragt, um so eine höchstmögliche Schnitthöhe mit einem gegebenen Sägeblatt zu erreichen. Dies erfordert natürlich, daß die Rotationsachse des Sägeblattes von der Unterseite der Tischplatte gesehen möglichst nahe an die Arbeitsfläche der Tischplatte herangebracht wird. Dies ist bei einem koaxial angeordneten Elektromotor kaum möglich, da dieser in jedem Fall einen größeren Durchmesser haben muß als eine auf der Werkzeugantriebswelle vorzusehende Riemenscheibe minimalen Durchmessers. Die Verwendung eines Riementriebes ist daher unter diesen Verhältnissen zusätzlich von Vorteil.

Die vom Bremsgenerator gespeiste Warnlampe läßt sich bei einer Kreissäge mit Vorteil auf der Sägeblattschutzhaube anbringen, wobei der Haubenhalter und der Spaltkeil sogar als Teile der Stromzuleitung zu der Warnlampe verwendet werden können. Andererseits ist es, wie auch bei anderen Arbeitsgeräten, möglich, die Warnlampe unmittelbar in den Betätigungsgriff für den Motorschalter zu legen.

Bei vielen Arbeitsgeräten, so insbesondere auch bei Kreissägen ist es vielfach üblich, als Betätigungselement für den Motorschalter ohnehin einen knüppelartig verlängerten Schalthebel zu verwenden, der mit seinem Ende aus dem Maschinengestell hinausragt. Es bietet sich im Rahmen der Erfindung an, diesen für die Betätigung des Elektroschalters vorgesehenen Schalthebel gleichzeitig mit einem entsprechenden Betätigungsgestänge zu versehen, durch das der beweglich gehaltene Bremsgenerator bei der Ausschaltbewegung des Schalthebels mit dem Riementrieb in Eingriff gebracht wird.

Da es im allgemeinen zweckmäßig ist, den Generator mit einer gewissen elastischen Rückstellkraft gegen den Treibriemen anzustellen, würde die Gefahr bestehen, daß der Schalthebel nach dem Loslassen wieder aus seiner Aus-Stellung weggedrückt und somit der Bremsgenerator außer Eingriff mit dem Treibriemen gebracht wird. Deshalb ist es bei derartigen Anordnungen erforderlich, daß der Schalthebel zum Ausschalten des Motors und zum Ineingriffbringen des Generators in eine Sperrstellung gebracht wird, aus der er nur durch aktive Betätigung eines Sperrelementes wieder gelöst werden kann. Als solches Sperrelement kann beispielsweise eine gewichtsbelastete Klinke verwendet werden, wie sie im Rahmen des Ausführungsbeispieles noch näher beschrieben wird. Eine solche Sperrstellung des Schalthebels schützt das Gerät auch zusätzlich vor unbeabsichtigtem Einschalten.

In bestimmten Anwendungsfällen kann es auch vorteilhaft sein, anstelle der mechanischen Betätigungseinrichtung zum Ineingriffbringen des Kleingenerators mit der Antriebseinrichtung mittels eines Übertragungsgestänges einen elektromagnetischen Stellantrieb zu verwenden, durch den der elektrische Kleingenerator über sein Antriebselement mit der Antriebseinrichtung verbunden wird. Im Fall einer Reibkupplung als Antriebselement kann der elektromagnetische Stellantrieb beispielsweise in einer zusätzlichen elektromagnetischen Kupplung bestehen, durch die die Reibkupplung eingerückt wird.

Der elektromagnetische Stellantrieb ist zweckmäßigerweise derart ausgebildet und geschaltet, daß er im nicht erregten Zustand den Kleingenerator mit der Antriebseinrichtung in Eingriff hält, der Kleingenerator aber bei elektrischer Erregung des elektromagnetischen Stellantriebes außer Eingriff mit der Antriebseinrichtung gebracht wird. Dies kann z. B. durch eine geeignete mechanische Rückstellfeder im Stellantrieb erreicht werden, unter deren Rückstellkraft der Kleingenerator bei stromlosem Zustand des Stellantriebes gegen die Antriebseinrichtung des Arbeitsgerätes angestellt bleibt. Der Vorteil einer solchen Schaltung besteht darin, daß die Sicherheitseinrichtung auch bei Stromausfall oder sonstiger Unterbrechung der elektrischen Versorgung des Arbeitsgerätes ihre Wirksamkeit entfaltet.

Die elektrische Betätigung des elektromagnetischen Stellantriebes ist mit dem Schalter zum Betätigen des Elektromotors des Arbeitsgerätes direkt verbunden.

Kurze Beschreibung der Zeichnungen

Im folgenden wird der Sicherheitsantrieb in Anwendung auf eine Tischkreissage unter Hinweis auf die beigefügten Zeichnungen im einzelnen näher beschrieben. In den Zeichnungen stellen dar :

Figur 1 eine Tischkreissäge mit Sicherheitsantrieb in Seitenansicht ;

Figur 2 eine Draufsicht auf die Antriebselemente der Kreissäge und

Figur 3 eine Darstellung der verwendeten Sperreinrichtung für den Schalthebel.

Bester Weg zur Ausführung der Erfindung

Von der dargestellten Kreissäge werden im folgenden nur diejenigen Teile beschrieben, die für den Sicherheitsantrieb von Bedeutung sind. Im übrigen handelt es sich bei dem dargestellten Gegenstand um eine Säge bekannter Bauart.

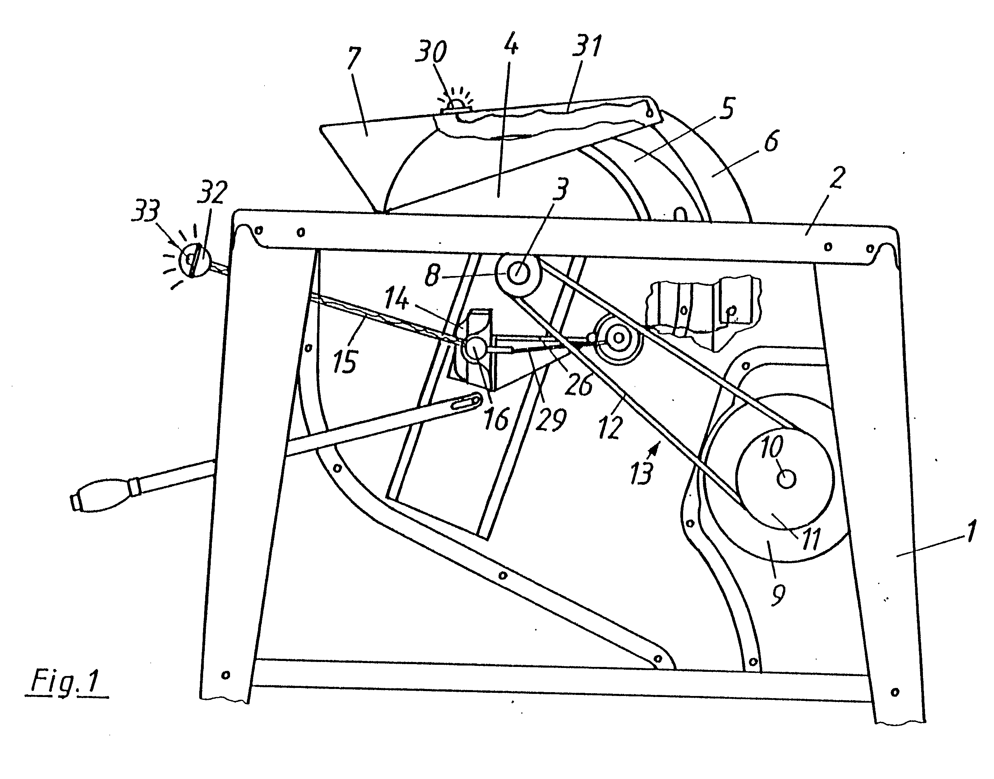

Die Säge hat einen Rahmen oder ein Tischgestell 1, welches nur teilweise dargestellt ist, und das an seiner Oberseite mit einer Tischplatte 2 abgeschlossen ist. Unterhalb der Tischplatte 2 ist auf einer Antriebswelle 3 ein Sägeblatt 4 drehbar gelagert, von dem in Fig. 1 lediglich der Flugkreisdurchmesser angedeutet ist. Hinter dem Sägeblatt 4 sind unter der Tischplatte 2 befestigt und über diese nach oben hinausragend ein Spaltkeil 5 und ein Haubenhalter 6 für die Schutzhaube 7 des Sägeblattes angeordnet.

Auf dem dem Sägeblatt 4 entgegengesetzten Ende ist auf der Antriebswelle 3 eine Riemenscheibe 8 angeordnet. Weiter unten im Maschinengestell befindet sich ein elektrischer Antriebsmotor 9, der auf seiner Abtriebswelle 10 ebenfalls mit einer Riemenscheibe 11 versehen ist. Die Riemenscheibe 8 und die Riemenscheibe 11 sind über einen Treibriemen 12 miteinander verbunden und bilden gemeinsam einen Riementrieb 13. Der Riementrieb 13 ist als Keilriementrieb ausgebildet.

Zum Ein- und Ausschalten des Elektromotors 9 ist ein gekapselter Schalter 14 vorgesehen, der zum Betätigen mit einem Schalthebel 15 versehen ist, welcher an der Bedienungsseite der Kreissäge aus dem Tischgestell hinausragt. Der Schalthebel 15 ist an der Schaltwelle des Schalters 14 angebracht, welche gleichzeitig den Drehpunkt 16 für den Schalthebel 15 bildet.

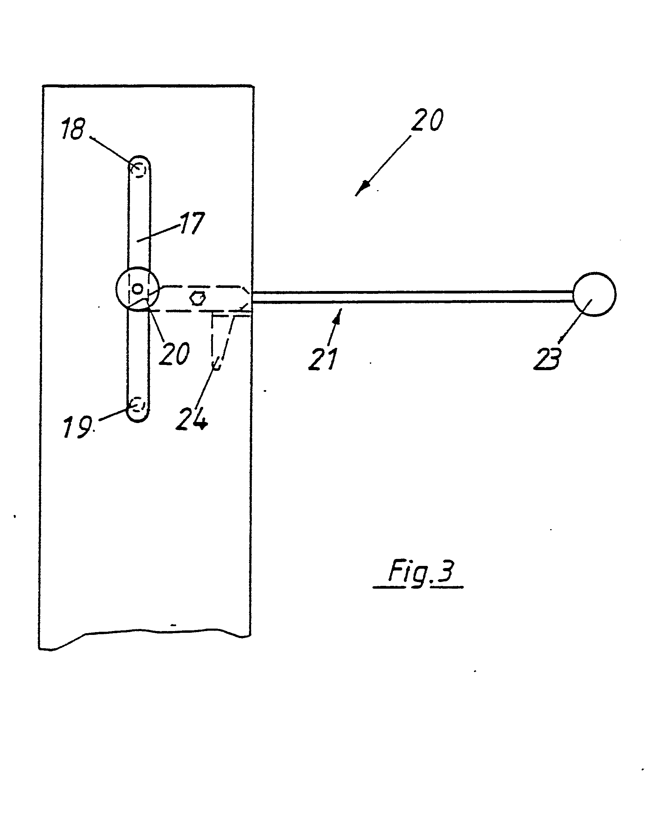

Wie in Fig. 3 angedeutet ist, ist der Schalthebel 15 an seiner Austrittsstelle aus dem Tischgestell in einem senkrechten, kulissenartigen Schlitz 17 geführt, in dem er zwischen einer oberen Einschaltstellung 18 und einer unteren Aus-Stellung 19 hin- und herbewegbar ist. Seitlich neben dem kulissenartigen Schlitz 17 ist ein Sperrelement 20 angeordnet, welches als doppelarmiger Hebel 21 ausgebildet ist, der mit seinem einen Ende sperrklinkenartig den kulissenartigen Schlitz 17 kreuzt und an seinem entgegengesetzten Ende mit einem Gewicht 23 belastet ist. Das durch Gewicht beschwerte Ende des doppelarmigen Hebels 21 ist durch einen Anschlag 24 unterstützt, welcher verhindert, daß sich der Hebel mit seinem belasteten Arm über die horizontale Stellung hinaus nach unten drehen kann. Es geht aus der Darstellung der Fig. 3 hervor, daß der Schalthebel 15, um in seine Aus-Stellung 19 überführt zu werden, an dem Sperrelement 20 vorbeibewegt werden muß, wobei dessen klinkenartiges Ende unter Anheben des gewichtbelasteten Endes 23 außer Deckung mit dem kulissenartigen Schlitz 17 gebracht wird, um nach Vorbeibewegen des Schalthebels 15 durch die Wirkung des Gewichtes 23 wieder in seine anschlagbegrenzte horizontale Stellung zurückzukehren. Ein Zurückbewegen des Schalthebels 15 aus seiner Aus-oder Sperrstellung 19 wird durch den Anschlag 24 des Sperrelementes 20 verhindert. Soll der Schalthebel 15 wieder angehoben und in seine Einschaltstellung 18 gebracht werden, muß das Sperrelement 20 von Hand an seinem gewichtsbelasteten Ende 23 soweit angehoben werden, bis das sperrklinkenartige Ende den kulissenartigen Schlitz 17 für eine solche Bewegung freigibt. Diese Anordnung verhindert einerseits, daß der Schalthebel 15 unbeabsichtigter Weise eingerückt wird, dient aber gleichzeitig auch zum Ineingriffbringen des Bremsgenerators, wie im folgenden noch beschrieben wird.

Die gesamte Antriebseinheit einschließlich Sägeblatt und Schutzvorrichtungen ist zum Ausführen von Schnitten, die gegen die Senkrechte geneigt sind, schwenkbar im Tischgestell angeordnet und zwar um eine horizontale Achse, die im wesentlichen durch das Sägeblatt verläuft und etwa in der Ebene der Tischplatte liegt.

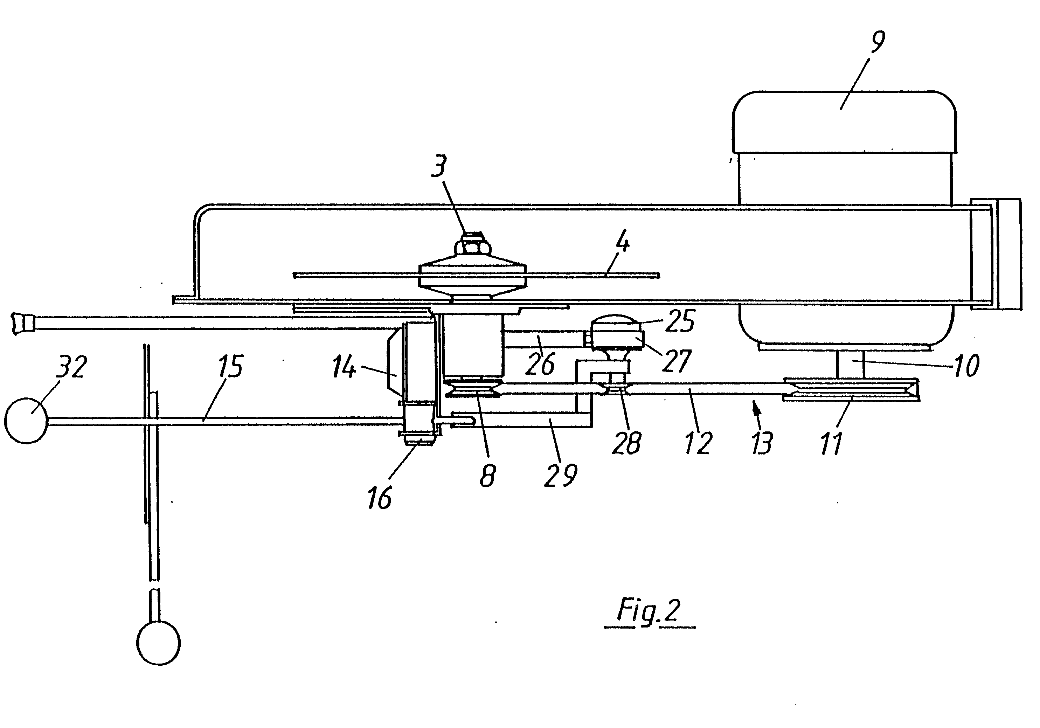

Wie aus den Fig. 1 und 2 hervorgeht, ist im Bereich des Riementriebes 13 ein Bremsgenerator 25 mittels einer beweglichen Halterung 26 befestigt, die im Ausführungsbeispiel aus einer Blattfeder besteht. Der Generator 25 ist im Ausführungsbeispiel ein handelsüblicher Kleindynamo oder Fahrraddynamo und ist zum Zwecke der Befestigung an der Blattfeder mit einer Schelle 27 versehen, die sein Gehäuse umgibt. Anstelle der für einen Kleindynamo üblichen Antriebsrolle ist der Generator 25 mit einer Riemenscheibe 28 versehen. Durch die Beweglichkeit der als Blattfeder ausgebildeten Halterung 26 läßt sich der Kleingenerator 25 mit seiner Riemenscheibe 28 gegen den Treibriemen 12 drücken, so daß dieser den Anker des Kleingenerators in Rotation versetzt. Das Ineingriffbringen des Kleingenerators mit dem Treibriemen erfolgt durch eine Betätigungseinrichtung, die einerseits aus dem Schalthebel 15 und andererseits einem Betätigungsgestänge 29 besteht, welches im Ausführungsbeispiel ebenfalls als eine Blattfeder ausgebildet ist. Diese Blattfeder 29 ist als eine Verlängerung des Schalthebels 15 jenseits von dessen Drehpunkt 16 an diesem befestigt und greift mit ihrem im Ausführungsbeispiel abgewinkelten anderen Ende am Hals des Kleingenerators 25 an. Durch eine Abwärtsbewegung des Schalthebels 15 in seine Aus-Stellung 19 wird die Blattfeder 29 mit ihrem am Kleingenerator 25 befestigten Ende auf die Zeichnung bezogen nach oben gedrückt, so daß sie den elastisch an der Blattfeder 26 befestigten Kleingenerator mit seiner Riemenscheibe 28 gegen das obere Trumm des Treibriemens 12 drückt. Die als Sperrstellung ausgebildete Aus-Stellung 19 des Schalthebels 15 bewirkt gleichzeitig, daß der Kleingenerator 25 solange in Eingriff mit dem Treibriemen 12 bleibt, bis der Schalthebel 15 bewußt aus seiner Sperrstellung 19 gelöst und wieder in die Einschaltstellung 18 überführt wird.

Wird der Elektromotor durch Senken des Schalthebels 15 in seine Sperrstellung 19 ausgeschaltet, wird gleichzeitig der Kleingenerator 25 gegen den Treibriemen 12 angestellt. Die noch im Sägeblatt 4 enthaltene kinetische Rotationsenergie wird durch den als Bremsgenerator geschalteten Kleingenerator 25 vernichtet. Die Bremswirkung wird dabei so eingestellt, daß den Vorschriften Genüge getan ist und das Sägeblatt innerhalb von 10 Sekunden nach dem Ausschalten des Motors zum Stillstand kommt.

Die während des Bremsvorganges im Kleingenerator 25 erzeugte elektrische Energie läßt sich mit Vorteil teilweise oder ganz zum Betreiben einer elektrischen Warneinrichtung ausnutzen, welche ein Signal abgibt, solange sich das Sägeblatt noch in seinem Nachlauf befindet. Diese Warneinrichtung ist im Ausführungsbeispiel als eine Warnlampe 30 ausgebildet, die sich an gut sichtbarer Stelle in der Schutzhaube des Sägeblattes befindet. Die Zuleitung erfolgt durch eine Kabelverbindung 31. Zumindest als einer der elektrischen Leiter kann für den Durchtrittsbereich durch die Tischplatte der Haubenhalter bzw. der Spaltkeil verwendet werden. Eine weitere Möglichkeit der Anbringung einer vom Kleingenerator 25 gespeisten Warnlampe ist in Fig. 1 dargestellt, indem der Griffknauf 32 des Schalthebels 15 eine Warnlampe 33 enthält.

Gewerbliche Verwertbarkeit

Durch die beschriebene Antriebseinrichtung wird unter Einsatz gängigster und billigster Bauteile und Komponenten erreicht, daß die Sicherheitsanforderungen zur zeitlichen Begrenzung des Nachlaufens des Sägeblattes erfüllt werden, wobei die in dem als Bremsgenerator arbeitenden Kleindynamo erzeugte elektrische Energie zusätzlich in vorteilhafter Weise zum Betrieb einer Warneinrichtung ausgenutzt wird, welche auf den Bewegungszustand des Werkzeuges während dessen, wenn auch schon begrenzter Nachlaufzeit aufmerksam macht.

**Patentansprüche**

1. Sicherheitseinrichtung für den Antrieb eines ein gefahrbringendes bewegtes Werkzeug (4) aufweisenden, elektromotorisch angetriebenen Arbeitsgerätes, mit einer Antriebswelle (3) für das Werkzeug (4), einem Elektromotor (9) mit einer Abtriebswelle (10), einer die Abtriebswelle (10) mit der Antriebswelle (3) verbindenden Antriebseinrichtung (13) und einem Schalter (14) zum Betätigen des Elektromotors (9), wobei die Sicherheitseinrichtung eine im Bereich der Antriebseinrichtung (13) angeordnete Bremseinrichtung (25) für geringe Bremsleistungen aufweist und eine mit dem Schalter (14) des Elektromotors (9) verbundene Betätigungseinrichtung (15, 29) vorgesehen ist, die beim Ausrücken des Schalters (14) die Bremseinrichtung (25) mit der Antriebseinrichtung (13) in Eingriff bringt, dadurch gekennzeichnet, daß als Bremseinrichtung des Arbeitsgerätes ein elektrischer Generator (25) vorgesehen ist, der zum Bremseinsatz mit der Antriebseinrichtung (13) mechanisch in Verbindung bringbar ist.

2. Sicherheitseinrichtung nach Anspruch 1, dadurch gekennzeichnet, daß der Generator (25) ein handelsüblicher, als Bremsgenerator geschalteter Fahrraddynamo ist.

3. Sicherheitseinrichtung nach Anspruch 1, dadurch gekennzeichnet, daß an geeigneter Stelle des Arbeitsgerätes eine elektrische Warneinrichtung (30, 33) angeordnet ist, die mit der vom Generator (25) erzeugten Spannung gespeist wird.

4. Sicherheitseinrichtung nach Anspruch 3, dadurch gekennzeichnet, daß die Warneinrichtung eine an gut sichtbarer Stelle des Gerätes angeordnete Warnlampe (30, 33) ist.

5. Sicherheitseinrichtung nach Anspruch 1, dadurch gekennzeichnet, daß über die Bremseinrichtung (25) und nachgeschaltete Mittel zumindest ein Teil der kinetischen Restenergie des abgeschalteten Elektromotors (9) beziehungsweise der Antriebseinrichtung (13) zur Betätigung einer mechanischen Signal- und Warneinrichtung umgesetzt wird.

6. Sicherheitseinrichtung nach Anspruch 1, dadurch gekennzeichnet, daß die Betätigungseinrichtung (15, 29) aus einem mechanischen Schalthebel (15) für den Schalter (14) und einem mit dem Schalthebel (15) und dem Generator (25) verbundenen Betätigungsgestänge (29) besteht.

7. Sicherheitseinrichtung nach Anspruch 6, dadurch gekennzeichnet, daß der Schalthebel (15) von seiner Einschaltstellung (18) in die Aus-Stellung (19) unter Ineingriffbringen des Generators (25) mit der Antriebseinrichtung (13) in eine Sperrstellung (19) bewegt werden muß, aus der er nur durch aktive Betätigung eines Sperrelements (20) wieder gelöst werden kann.

8. Sicherheitseinrichtung nach Anspruch 7, dadurch gekennzeichnet, daß der Schalthebel (15) in einem kulissenartigen Schlitz (17) in der Vorrichtung geführt ist, und daß das Sperrelement (20) ein an seinem einen Ende (23) gewichtsbelasteter doppelarmiger Hebel (21) ist, der mit seinem anderen Ende den kulissenartigen Schlitz (17) kreuzt und durch den in seine Aus-Stellung (19) vorbeibewegten Schalthebel (15) vorübergehend auslenkbar ist, um durch die Gewichtsbelastung wieder in seine Sperrstellung zurückzukehren, während er bei versuchter Rückbewegung des Schalthebels (15) durch einen Anschlag (24) gehindert ist, den Schlitzbereich (17) freizugeben.

9. Sicherheitseinrichtung nach Anspruch 1, dadurch gekennzeichnet, daß die Betätigungseinrichtung ein elektromagnetischer Stellantrieb ist, dessen elektrische Betätigung mit dem Schalter zum Betätigen des Elektromotors verbunden ist.

10. Sicherheitseinrichtung nach Anspruch 9, dadurch gekennzeichnet, daß der elektromagnetische Stellantrieb so ausgebildet ist, daß sich der Kleingenerator bei stromlosem Zustand des Stellantriebes in Eingriff mit der Antriebseinrichtung befindet und bei Erregung des elektromagnetischen Stellantriebes außer Eingriff mit der Antriebseinrichtung gelangt.

11. Sicherheitseinrichtung nach einem der Ansprüche 1 bis 10, dadurch gekennzeichnet, daß das den Generator (25) mit der Antriebseinrichtung (13) in Eingriff bringende Antriebselement eine Reibkupplung ist.

12. Sicherheitseinrichtung nach Anspruch 1, dadurch gekennzeichnet, daß die Antriebseinrichtung ein Riementrieb (13) ist, und daß der Generator (25) mit einer Riemenantriebsscheibe (28) als Antriebselement versehen und im Bereich des Riementriebes (13) derart beweglich gehaltert ist, daß er mit seiner Riemenantriebsscheibe (28) gegen den Treibriemen (12) angestellt werden kann.

13. Sicherheitseinrichtung nach Anspruch 6, dadurch gekennzeichnet, daß die Antriebseinrichtung ein Riementrieb (13) ist, und daß der Generator (25) mit einer Riemenantriebsscheibe (28) als Antriebselement versehen und im Bereich des Riementriebes (13) derart beweglich gehaltert ist, daß er mit seiner Riemenantriebsscheibe (28) gegen den Treibriemen (12) angestellt werden kann.

14. Sicherheitseinrichtung nach Anspruch 13, dadurch gekennzeichnet, daß die bewegliche Halterung (26) des Generators aus einer Blattfeder besteht, die einerseits gestellfest und andererseits am Generator (25) befestigt ist, und daß das Betätigungsgestänge (29) aus einer weiteren Blattfeder besteht, die einerseits in Verlängerung des Schalthebels (15) an diesem angebracht und andererseits ebenfalls am Generator (25) befestigt ist, so daß der Generator (25) bei Schwenken des Schalthebels (15) um einen Drehpunkt (16) durch Auslenken der Blattfedern (26, 29) mit dem Triebriemen (12) in Eingriff gebracht wird.

**Claims**

1. Safety device for an electromotively driven working apparatus having a hazardous, moving tool (4), said apparatus comprising a drive shaft (3) for said tool (4), an electric motor (9) having a driven shaft (10), drive means (13) linking that driven shaft (10) with said drive shaft (3), and a switch (14) for actuating said electric motor (9), said safety device comprising brake means (25) for low brake power, located at the drive means (13), and actuating means (15, 29) connected to that switch (14) of said electric motor (9), which actuating means is adapted to bring said brake means in engagement with said drive means (13) upon disengagement of said switch (14), characterized in that as brake means of that working device an electric generator (25) is provided, which for exerting its braking action is mechanically engageable with said drive means (13).

2. Safety device according to claim 1, characterized in that said generator (25) is a commercially available bicycle dynamo.

3. Safety device according to claim 1, characterized in that an electric warning means (30, 33) is located in a proper place at that working apparatus, which warning means ist charged with the power generated by that generator (25).

4. Safety device according to claim 3, characterized in that said warning means is a warning light (30, 33) positioned at a well visible place of that apparatus.

5. Safety device according to claim 1, characterized in that through said brake means (25) and subsidiary means connected thereto, at least part of the residual kinetic energy of the disconnected electric motor (9) resp. of said drive means (13), is converted for the actuation of a mechanical signalling or warning means.

6. Safety device according to claim 1, characterized in that said actuating means (15, 29) consists of a mechanical switch lever (15) for said switch (14) and an actuating linkage (29) connected between said switch lever (15) and said generator (29).

7. Safety device according to claim 6, characterized in that said switch lever (15) when changed from its on-position (18) into its off-position (19) must under engagement of said generator (25) with said drive means (13) be moved into a locking position (19) from which it may only be released by active actuation of a locking element (20).

8. Safety device according to claim 7, characterized in that said switch lever (15) is guided in a cam-like slot (17) within that apparatus, and that said locking element (20) is a two arm lever (21) gravity, biassed at its one end (23) and travesing with its other end said cam-like slot (17) and which lever is temporarily deflectable by the switch lever (15) passing into its off-position (19), and adapted to return into its locking position by action of the gravity bias, while said lever (21) is hindered by an abutment (24) to clear the slot area on attempt of a reverse movement of the switch lever (15).

9. Safety device according to claim 1, characterized in that the actuating means is an electromagnetically operated pilot drive the electrical actuating of which is coupled to the switch for energizing the electric motor.

10. Safety device according to claim 9, characterized in that the electromagnetic pilot drive is adapted such that the small generator is in engagement with said drive means when the electromagnetic pilot drive is in its de-energized state, and that when the electromagnetic pilote drive is in its energized state, the generator is out of engagement with said drive means.

11. Safety device according to anyone of claim 1-10, characterized in that the drive element causing engagement of that generator (25) with said drive means (13) is a friction clutch.

12. Safety device according to claim 1, characterized in that said drive means is a belt drive (13), and that said generator (25) is provided with a belt pulley (28) as drive element and is shiftably mounted adjacent said belt drive (13) suchs, that it may be moved with its belt pulley (28) against the drive belt (12).

13. Safety device according to claim 6, characterized in that said drive means is a belt drive (13), and that said generator (25) is provided with a belt pulley (28) as drive element and is shiftably mounted adjacent said belt drive (13) suchs, that it may be moved with its belt pulley (28) against the drive belt (12).

14. Safety device according to claim 13, characterized in that said shiftable mounting (26) of the generator consists of a leaf spring, connected between the apparatus frame and the generator (25) and that the actuating linkage (29) consists of a further leaf spring, connected with its one end to the switch lever (15) in extension of the latter, and with its other end also to the generator, such, that the generator (25) upon shifting of the switch lever (15) about a pivot (16) is brought into engagement with the drive belt (12) by displacement of the leaf springs (26, 29).

## Revendications

1. Dispositif de sécurité pour entraîner un appareil de travail à entraînement électromotorisé muni d'un outil mobile (4) susceptible d'être dangereux, comprenant un arbre menant (3) pour l'outil (4), un moteur électrique (9) avec un arbre mené (10), un mécanisme d'entraînement (13) reliant l'arbre mené (10) à l'arbre menant (3) et un interrupteur (14) pour actionner le moteur électrique (9), le dispositif de sécurité comportant un mécanisme de freinage (25) pour de faibles puissances de freinage, situé au voisinage du mécanisme d'entraînement (13) et un mécanisme d'actionnement (15, 29), relié à l'interrupteur (14) du moteur électrique (9), étant prévu qui met le mécanisme de freinage (25) en prise avec le mécanisme d'entraînement (13) lors du déclenchement de l'interrupteur (14), caractérisé par le fait qu'il est prévu, en tant que mécanisme de freinage de l'appareil de travail, un générateur électrique (25) pouvant être relié mécaniquement au mécanisme d'entraînement (13) en vue de l'enclenchement du freinage.

2. Dispositif de sécurité selon la revendication 1, caractérisé par le fait que le générateur (25) est une dynamo de bicyclette courante dans le commerce, branchée en tant que générateur de freinage.

3. Dispositif de sécurité selon la revendication 1, caractérisé par le fait qu'un mécanisme électrique d'alarme (30, 33), installé à un emplacement approprié de l'appareil de travail, est alimenté par la tension produite par le générateur (25).

4. Dispositif de sécurité selon la revendication 3, caractérisé par le fait que le mécanisme d'alarme consiste en un témoin d'alerte (30, 33) implanté à un endroit bien visible de l'appareil.

5. Dispositif de sécurité selon la revendication 1, caractérisé par le fait qu'au moins une part de l'énergie cinétique résiduelle du moteur électrique déclenché (9) ou, respectivement, du mécanisme d'entraînement (13), est convertie, par l'intermédiaire du mécanisme de freinage (25) et de moyens branchés en aval, en vue de l'actionnement d'un dispositif mécanique de signalisation et d'alarme.

6. Dispositif de sécurité selon la revendication 1, caractérisé par le fait que le mécanisme d'actionnement (15, 29) se compose d'un levier mécanique (15) de commutation de l'interrupteur (14), ainsi que d'une tringlerie d'actionnement (29) reliée au levier de commutation (15) et au générateur (25).

7. Dispositif de sécurité selon la revendication 6, caractérisé par le fait que le levier de commutation (15) doit être déplacé de sa position d'enclenchement (18) à la position de déclenchement (19) par venue en prise du générateur (25) avec le mécanisme d'entraînement (13), jusqu'à une position de verrouillage (19) dont il ne peut être à nouveau libéré que par la manœuvre active d'un élément de verrouillage (20).

8. Dispositif de sécurité selon la revendication 7, caractérisé par le fait que le levier de commutation (15) est guidé, dans ce dispositif, dans une fente (17) du type coulisse ; et par le fait que l'élément de verrouillage (20) consiste en un levier (21) à bras double qui est chargé par un poids à l'une (23) de ses extrémités, qui croise par son autre extrémité la fente (17) du type coulisse et qui peut être provisoirement dévié par l'entremise du levier de commutation (15) amené en regard de sa position de déclenchement (19), pour retourner sous la charge pondérale à sa position de verrouillage, cependant que, lors d'une tentative de mouvement rétrograde du levier de commutation (15), il est empêché par une butée (24) de libérer la région de la fente (17).

9. Dispositif de sécurité selon la revendication 1, caractérisé par le fait que le mécanisme d'actionnement est un servo-entraînement électromagnétique dont la manœuvre électrique est raccordée à l'interrupteur pour actionner le moteur électrique.

10. Dispositif de sécurité selon la revendication 9, caractérisé par le fait que le servo-entraînement électromagnétique est réalisé de telle sorte que le petit générateur soit en prise avec le mécanisme d'entraînement lorsque le servo-entraînement est dépourvu de courant, et hors prise avec le mécanisme d'entraînement en cas d'excitation du servo-entraînement électromagnétique.

11. Dispositif de sécurité selon l'une des revendications 1 à 10, caractérisé par le fait que l'élément d'entraînement mettant en prise le générateur (25) avec le mécanisme d'entraînement (13) consiste en un accouplement à frottement.

12. Dispositif de sécurité selon la revendication 1, caractérisé par le fait que le mécanisme d'entraînement est un entraînement (13) par courroie ; et par le fait que le générateur (25) est pourvu d'une poulie (28) à courroie d'entraînement en tant qu'élément d'entraînement et est maintenu mobile, au voisinage de l'entraînement (13) par courroie, de telle sorte qu'il puisse être réglé par sa poulie (28) vis-à-vis de la courroie d'entraînement (12).

13. Dispositif de sécurité selon la revendication 6, caractérisé par le fait que le mécanisme d'entraînement est un entraînement (13) par courroie ; et par le fait que le générateur (25) est pourvu d'une poulie (28) à courroie d'entraînement en tant qu'élément d'entraînement et est maintenu mobile, au voisinage de l'entraînement (13) par courroie, de telle sorte qu'il puisse être réglé par sa poulie (28) vis-à-vis de la courroie d'entraînement (12).

14. Dispositif de sécurité selon la revendication 13, caractérisé par le fait que le support mobile (26) du générateur consiste en une lame de ressort qui est assujettie d'un côté au bâti et est fixée de l'autre côté au générateur (25) ; et par le fait que la tringlerie d'actionnement (29) consiste en une autre lame de ressort qui est installée d'un côté sur le levier de commutation (15), dans le prolongement de ce dernier, et est également fixée de l'autre côté au générateur (25) de façon que, lors du pivotement du levier de commutation (15) autour d'un point de rotation (16), le générateur (25) soit mis en prise avec la courroie d'entraînement (12), par déviation des lames de ressort (26, 29).

Fig.1

0 091 918

Fig.2

0 091 918

*Fig.3*